# EUROPEAN PATENT SPECIFICATION

(11) **EP 3 823 858 B1**
(45) Date of publication and mention of the grant of the patent: **24.08.2022**
(21) Application number: 19769885.5
(22) Date of filing: 19.07.2019
(51) Int. Cl.: B60P 3/22

(54) **TANK FILLING DEVICE**
TANKFÜLLVORRICHTUNG
DISPOSITIF DE REMPLISSAGE DE RÉSERVOIR

(30) Priority: 19.07.2018 IT 201800007337
(43) Date of publication of application: 26.05.2021
(73) Proprietor: IVECO MAGIRUS AG, 89079 Ulm (DE)
(72) Inventor: SEMMLER, Oliver, 88416 Ochsenhausen (DE); HUMMERJOHANN, Tim, 88483 Burgrieden (DE)
(74) Representative: Faraldi, Marco
(86) International application number: PCT/IB2019/056206
(87) International publication number: WO 2020/016852

(56) References cited:
- EP-B1- 2 009 336
- DD-A1- 276 461
- US-A- 5 662 140

## Description

### TECHNICAL FIELD

The present invention relates to a tank filling device according to the preamble of claim 1.

### BACKGROUND ART

Tank filling devices of the above kind are commonly used at liquid tanks of fire extinguishing vehicles. The tank filling device is mounted on top of the tank, to be connected with a source of a fire extinguishing liquid (e.g., water). Under the pressure of the liquid source, the liquid enters the housing through the liquid inlet and flows into the tank through the liquid outlet at the bottom of the housing. The liquid outlet can be opened or closed by means of a one-way valve. The valve body of this one-way valve is biased by a tension element in a direction to close the liquid outlet. Hence the liquid outlet is opened only when the housing is filled with water. To prevent overfilling of the tank, an overflow is provided at the housing. Excessive water not entering the tank through the liquid outlet may enter an overflow to be guided to the exterior of the vehicle.

The purpose of the one-way valve is to prevent liquid contained inside the tank from being spilled through the liquid outlet. In a condition in which the housing is not filled, in particular in a driving state of the vehicle, the tension element keeps the one-way valve in its closed position.

In recent years, the regulatory requirements for the use of tanks of fire fighting vehicles have become more restrictive. For example, it must be ensured by all means that no liquid having entered the tank or the tank filling device can flow back through the filling line towards the liquid source, to prevent any contamination of the liquid source, which may be the public potable water supply system. In the driving state of the vehicle, the flow back of liquid into the tank filling lines must be minimized. On the other hand, an effective flow rate should be provided to fill the tank as fast as possible.

EP 2 009 336 B1 discloses a tank filling device which provides an overflow device for a liquid container of the present kind, wherein a one-way valve is disposed for opening and closing the passage between the housing and the tank. Without any pressure acting from the housing towards the interior of the tank, the one-way valve keeps its closed state by being biased in the closing direction by the tension element. A liquid pressure inside the housing acts against the tension of the tension element to open the one-way valve, such that the liquid inside the housing can enter the tank. At the same time, the overflow is opened to prevent overfilling of the tank.

While this tank filling device keeps its closed position to seal the tank volume effectively after the filling process, it suffers from various disadvantages. One disadvantage is that the one-way valve used in this kind of tank filling device opens under high liquid pressure only. Secondly, the overflow is opened only in a condition when the one-way valve, i. e. the liquid outlet connecting the housing with the tank is also opened, during the filling of the tank. When no pressure acts against the tension element to keep the one-way valve opened, the overflow is also closed.

Other known systems are disclosed in documents DD276461 A1 or US5662140 A.

### DISCLOSURE OF INVENTION

The object of the present invention is to provide a tank filling device of the above kind which maximizes the flow rate into the tank without the requirement of building up a high pressure by the liquid source, while preventing a flow back from the housing to the liquid inlet, i. e. in the direction back to the liquid source, by simple means.

These objects are achieved by a tank filling device comprising the features of claim 1.

According to the present invention, the one-way valve for opening and closing the liquid outlet of the housing is a pot valve with a valve body comprising a chamber which is opened towards the liquid outlet, and a one-way drain valve arranged at the chamber with its downstream side directed towards the exterior of the chamber. This chamber forms a space within the valve body which is filled by the liquid entering the housing through the liquid inlet, i. e. originating from the pressure source. While filling this chamber, the one-way drain valve drains the chamber with a flow rate which is relatively small. Accordingly, the liquid level inside the chamber will rise during filling the housing.

The chamber will be filled until the weight of the valve body, which increases by filling the chamber, will act against the tension of the tension element such that the valve body will move downward, opening the liquid outlet of the housing. In this opened position, the flow rate from the housing to the tank will be enlarged. Liquid entering the housing will be supplied to the tank through the pot valve in its opened position.

When the filling process has stopped, liquid remaining into the housing and the chamber of the valve body of the pot valve will be further drained through the one-way drain valve arranged at the chamber. Consequently, the the weight acting against the tension of the tension element will decrease, and the tension element will finally act to move the valve body back into the position for closing the housing.

The volume of the chamber may be adapted to the tension of the tension element such that the one-way valve will open when the chamber is partially filled. Opening of the pot valve can be performed without any additional pressure supplied at the liquid inlet. The overflow can be arranged at the housing such that no liquid entering the housing through the liquid inlet will enter the overflow but will flow directly into the chamber of the valve body.

According to a preferred embodiment of the present invention, the flow rate of the drain valve is smaller than the flow rate of the liquid inlet. In this case the chamber inside the valve body will fill automatically although the drain valve is opened.

More preferably, the valve body comprises a pressure relief valve arranged at the chamber which is configured to open when a predetermined pressure acting from the exterior of the chamber torards the inner space of the chamber is exceeded. This pressure relief valve is a safety feature to prevent any damaging of the tank caused by overpressure.

Even more preferably, the tension element is a coil spring.

According to still another preferred embodiment, the chamber has a cylindrical shape. For example, the chamber may be delimited by a flat circular bottom of the valve body and a vertical cylindrical wall, which is provided with a seal at its upper rim to be pressed against a bottom wall of the housing from below. No further opening may be present in the cylindrical wall and the bottom of the valve body, except the drain valve and, if present, the pressure relief valve, such that liquid entering the chamber will be drained with the drain valve only in the closed position of the one-way valve.

According to a preferred embodiment of the present invention, the overflow comprises an overflow channel opening towards the interior of the housing through an overflow opening. More preferably, the overflow channel has an arcuate shape extending partially around the interior space of the housing.

Even more preferably, the overflow comprises an overflow opening delimited by a lower edge disposed at a lower level than a lower edge delimiting the liquid inlet. This prevents liquid entering through the liquid inlet from entering the overflow opening directly when the housing is filled.

More preferably, the liquid inlet is disposed laterally at the housing. The number of liquid inlets is not limited to one, but there can rather be a plurality of different liquid inlets.

According to another preferred embodiment of the present invention, at least the bottom wall of the housing, a ceiling wall of the housing, the pot valve and the drain valve form an integral unit, and at least an outer wall of the housing forms a frame surrounding a central opening for removably receiving the integral unit. This arrangement simplifies the handling of the components of the tank filling device which are integrated to the integral unit. A replacement of this unit can be performed in a short changeover time.

More preferably, the central opening forms a manway opening. Such openings are present at many tanks, and using this opening for mounting a replaceable integral unit provides a constructional advantage.

The present invention is further related to a tank, comprising a top wall, a manway opening disposed in the top wall, and a tank filling device as described above, wherein at least a part of the tank filling device is removably inserted into the manway opening.

Moreover, the present invention is further related to a tank vehicle, comprising a tank as described above.

### BRIEF DESCRIPTION OF THE DRAWINGS

The present invention will be further elucidated and explained in more detail by means of the following figures.
- Fig. 1 and 2: are perspective views of an embodiment of the tank filling device according to the present invention, which are partially cut-off, in different states of operation;
- Fig. 3 and 4: are schematic sections of the tank filling device of Fig. 1 and 2 in different states of operation;
- Fig. 5: shows the tank filling device of Fig. 1 and 4 in an operation state corresponding to a driving state of a vehicle comprising the tank filling device;
- Fig. 6: is a perspective top view of the tank filling device of Fig. 1 to 5, which is partially cut-off at its ceiling portion; and
- Fig. 7: is a schematic view demonstrating the tank filling device of Fig. 1 to 6 in a disassembled state.

### BEST MODE FOR CARRYING OUT THE INVENTION

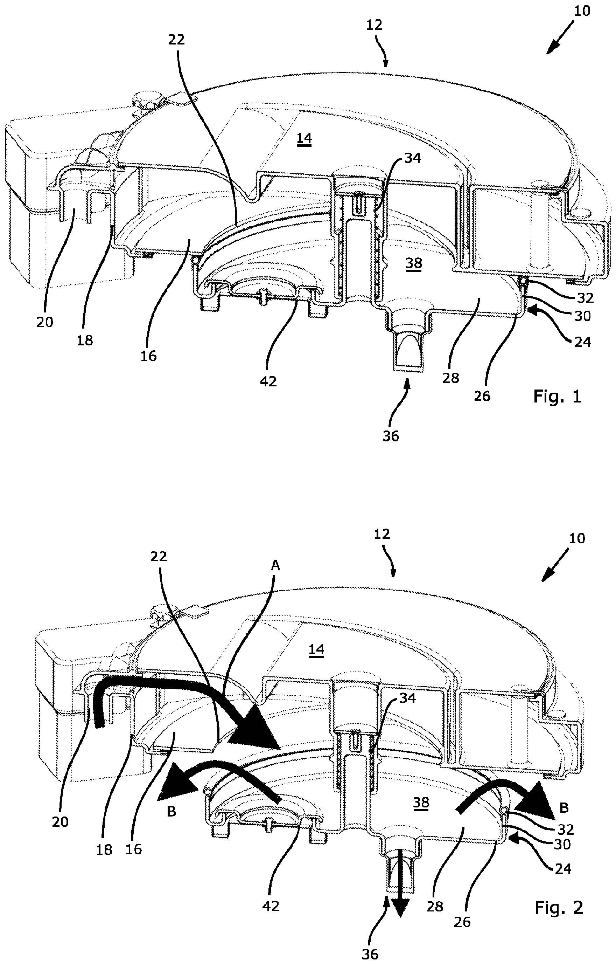

The tank filling device 10 shown in Fig. 1 is provided to be mounted in a top wall of a tank of a vehicle for receiving a liquid. The tank and the vehicle as such are not shown in this figure. In one embodiment, the tank is provided for receiving a fire extinguishing liquid, in particular water, and the tank is part of a fire fighting vehicle.

The tank filling device 10 is provided for filling the tank with the liquid and for preventing the liquid from being spilled in a driving state of the vehicle. Other features, which will be explained in the following, serve to prevent liquid from entering the housing and the tank from flowing back to the liquid source, to prevent any contamination of the liquid source with undesired or toxic substances. This is of particular importance in case the liquid source is the public potable water net.

The tank filling device 10 comprises a housing 12 which has a generally flat cylindrical shape, with a ceiling wall 14, a bottom wall 16 and a cylindrical outer wall 18. At the outer wall 18, a liquid inlet 20 is provided laterally at the housing 12. Liquid from a liquid source (not shown) enters the housing 12 in a radially inward direction. Although only one liquid inlet 20 is shown here in cross section, a plurality of liquid inlets 20 may be present.

At the bottom wall 16 of the housing 12, an opening is provided forming a liquid outlet 22. The liquid outlet 22 is relatively large and takes the major part of the bottom of the housing 12, so that the bottom wall 16 forms only a remaining rim portion of the bottom of the housing 12 surrounding the liquid outlet 22. A resulting flow rate through the liquid outlet 22 at the bottom of the housing 12 is much larger than the flow rate of the liquid inlet 20.

The liquid outlet 22 can be opened and closed by a one-way valve. Because of its shape and function, this one-way valve will be designated as a pot valve 24 in the following. Its valve body 26 has a generally cylindrical shape, with a flat circular bottom wall 28 and a surrounding cylindrical wall 30. The upper rim of this cylindrical wall 30 is provided with a seal 32. The bottom wall 28 and the cylindrical wall 30 of the valve body 26 delimit a chamber 38 open towards the liquid outlet 22 of the housing 12. In the closed operation state of the pot valve 24, the valve body 26 is pressed upwards in a vertical direction so that the seal 32 is pressed against the bottom wall 16 of the housing 12 from below.

On the vertical cylindrical axis of the valve body 26, a coil spring 34 is arranged as a tension element configured to bias the valve body 26 into a closed state, in which the seal 32 is pressed against the bottom wall 16 of the housing 12. This is provided by fixing the lower end of the spring 34 to the valve body 26 and fixing the upper end of the spring 34 to the housing 12 in a way that the spring 34 will be extended and tensioned when the valve body 26 is moved vertically downward. With no pressure acting on the bottom wall 28 of the valve body 26 from above, the spring 34 will hold the valve body 26 closed. On the other hand, a pressing force acting on top of the bottom wall 28 large enough may move the valve body 26 downward, releasing the tight connection between the seal 32 and the bottom wall 16 of the housing 12 so that the pot valve 24 is opened. As will be seen in the following, the tension of the spring 34 may be set such that the weight of a liquid, in particular water, having filled the chamber 38 within the valve body 26 at least partially is sufficient to overcome the tension force of the coil spring 34 and to open the pot valve 24.

In the bottom wall 28 of the valve body 26, a drain valve 36 is provided. This drain valve 36 is a one-way valve, namely a membrane valve in the present embodiment, although other types of one-way valve can be used to provide the desired function, namely to drain the content of the chamber 38. For this purpose, the downstream side of the drain valve 36 is directed downwardly, i. e. towards the exterior of the chamber 38, such that liquid inside the chamber 38 may pass the drain valve 36, but no liquid can pass the drain valve 36 in the opposite direction, i. e. back to the interior of the chamber 38.

The flow rate of the drain valve 36 is smaller than the flow rate of the liquid inlet 20 at the housing 12. For this reason the chamber 38 inside the valve body 26 will be filled when liquid enters the housing 12 through the liquid inlet 20, although a part of this liquid will be drained through the drain valve 36.

Consequently, the liquid volume inside the chamber 38 will increase, also increasing the weight acting on the bottom wall 28 of the valve body 26. Once this weight is large enough to pull the valve body 26 downward against the tension of the coil spring 34, the pot valve 24 will open such that a circular space will open between the seal 32 and the bottom wall 16 of the housing 12, as it is demonstrated in Fig. 2. Hence the liquid outlet 22 opens towards the tank volume located below. The chamber 38 will fill until the liquid flows over the upper rim of the cylindrical wall 30 (arrows B) to fill the tank.

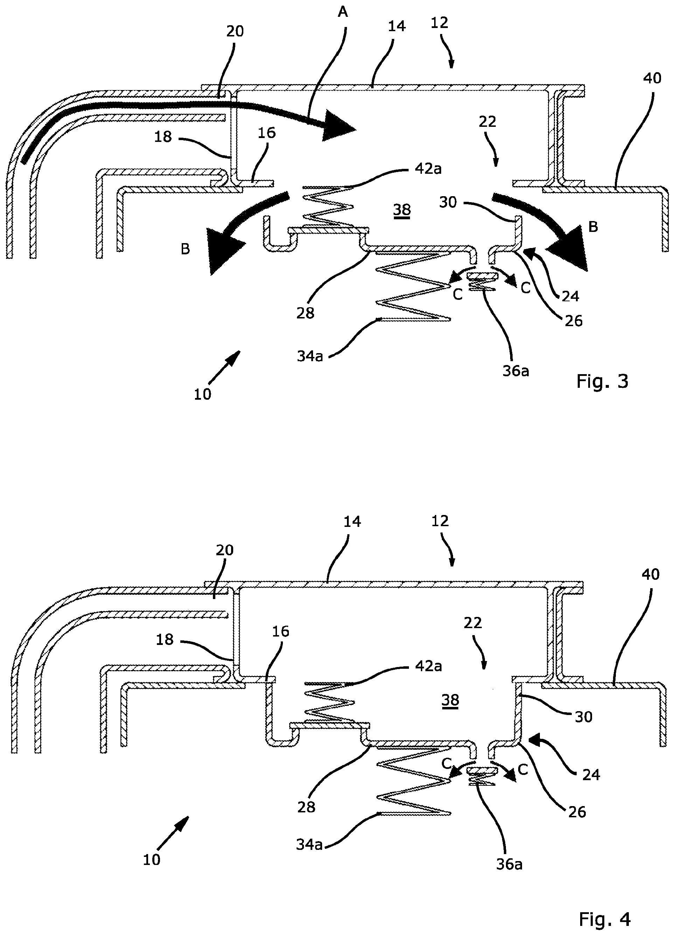

The operation of the pot valve 24 is further demonstrated in Fig. 3, also showing the tank 40 and the inlet flow through the liquid inlet 20 (arrow A), the liquid flow through the liquid outlet 22 opened by the pot valve 24 (arrows B), and the liquid flow through the drain valve 36 (arrows C). A spring 34a in Fig. 3 to 5 is shown symbolically only to demonstrate the action of the coil spring 34, namely to press the valve body 26 of the pot valve 24 upwardly when no pressure or weight acts on the bottom wall 28, but to open when the tension force of the coil spring 34 is exceeded by the weight of pressure of the liquid volume filling the chamber 38. A spring 36a is shown symbolically to demonstrate the action of the drain valve 36, namely to close when no pressure acts on the drain valve 36 from the chamber 38, but to open when a small pressure acts from the chamber 38. A small volume of liquid may be sufficient to open the drain valve 36 so that the chamber 38 can be drained at least almost completely.

When the filling stream to the liquid inlet 20 stops, the chamber 38 will be drained further through the drain valve 36 until the weight acting on the bottom wall 28 of the valve body 26 is small enough so that the valve body 26 is biased back into the closing position of the pot valve 24 by the tension of the coil spring 34, as it is demonstrated in Fig. 4. Liquid still contained in the chamber 38 will be further drained through the drain valve.

After the chamber 38 has been drained, the drain valve 36 closes. As a result, there is no remaining fluid connection between the inner space of the housing 12 and the tank 40. When the filling process has been completed, any spilling of liquid contained within the tank 40 to the outside is prevented by the pot valve 24 and the drain valve 36.

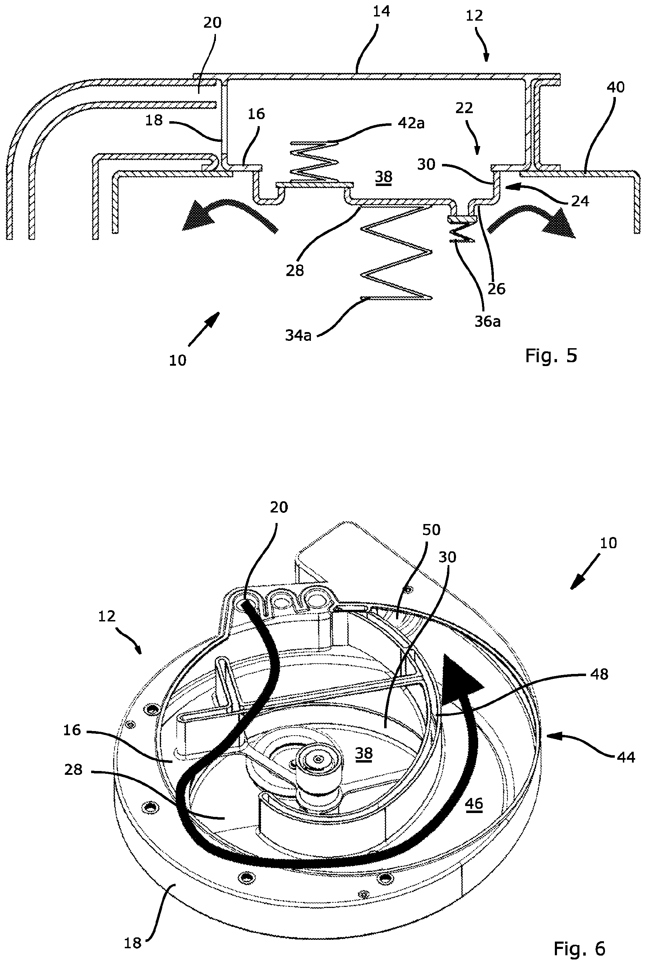

Fig. 1 to 4 further show a pressure relief valve 42 arranged at the chamber 38, namely at the bottom wall 28 of the valve body 26. This pressure relief valve 42 is configured to open when a predetermined pressure inside the tank 40 is exceeded. It is configured as a one-way valve, which is blocked when the pressure inside the housing 12 and the chamber 38 is larger than the pressure inside the tank 40, but it may open in case of a large pressure inside the tank 40. It is provided to prevent any damage of the tank 40 in case of an overpressure. It is noted that the pressure to open the pressure relief valve 42 will be set such that the pressure relief valve 42 will always be closed in a usual filling situation in normal use of the tank filling device. In particular it will usually be closed in the situation in Fig. 5 after filling the tank 40, to prevent liquid from entering the chamber 38, i. e. preventing a backflow. The action of the pressure relief valve 42 is demonstrated in Fig. 3 to 5 by a spring 42a, biasing a disc-shaped valve body of the pressure relief valve 42 in its closed position.The tank filling device 10 is further provided with an overflow 44 (referring in particular to Fig. 1 and 6) which is disposed at the housing 12. In more detail, the overflow 44 comprises an overflow channel 46 (Fig. 6) which has an arcuate shape extending partially around the interior space of the housing 12, and separated from the interior space of the housing 12 by an inner wall 48. The overflow channel 46 runs from the interior of the housing 12 towards an overflow opening 50 located near the liquid inlet 20. Through the overflow opening 50, liquid flowing from the interior of the housing 12 to the overflow channel 46 is guided towards an exterior space (not shown).

A lower edge delimiting the overflow opening 50 is disposed at a lower level than a lower edge delimiting the liquid inlet 20. Because of this arrangement, a flowback of liquid through the overflow opening 50 through the overflow channel 46 to enter the liquid inlet 20 in direction towards the liquid source is reliably prevented.

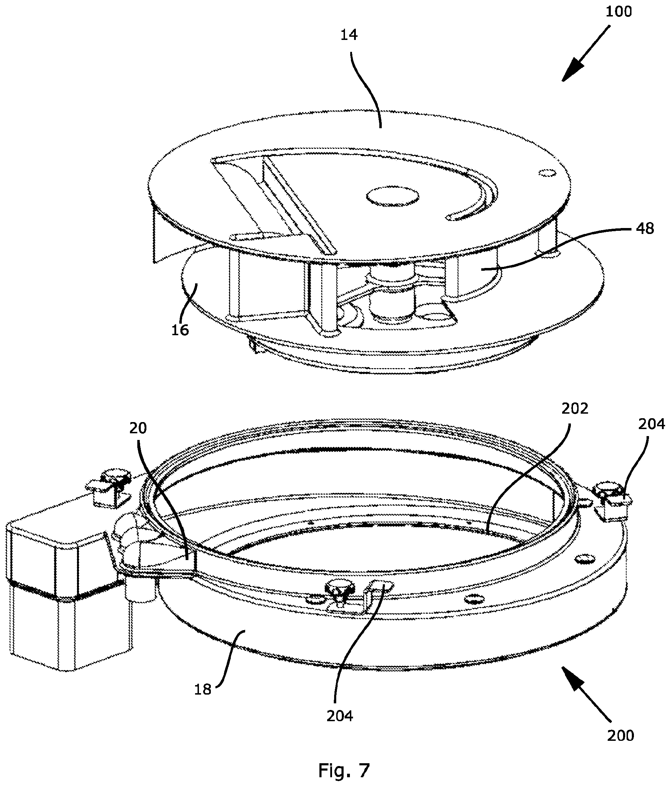

As shown in Fig. 7, the tank filling device 10 comprises an integral unit 100 comprising at least the bottom wall 16 and a ceiling wall 14 of the housing 12, which are connected by the wall 48 separating the overflow channel 46 from the interior space of the housing 12 to form one single unit, comprising further the pot valve 24, the drain valve 36 and the pressure relief valve 42. The outer wall 18 of the housing 12 is comprised within a frame 200 surrounding a central opening 202 for removably receiving the integral unit. The tank filling device 10 is assembled by inserting the integral unit 100 into the opening 202. The liquid inlets 20 are formed at the frame 200. In the present embodiment, three different liquid inlets 20 are provided. Moreover, the overflow opening 50 is also provided at the frame. When the integral unit 100 is inserted into the central opening 202, it can be fixed by clamps 204 or the like, as demonstrated in Fig. 7.

The central opening 202 forms a circular manway opening in the tank 40 by mounting the frame 200 at a top wall of the tank 40. A person may cross the manway opening to enter the tank 40 when the integral unit 100 is removed. It is closed by inserting the integral unit 100 into the manway opening.

Because the pot valve 24 of the tank filling device 10 opens when a sufficient liquid volume (i. e. water volume) has filled the chamber 38, no additional filling pressure needs to be applied through the liquid inlet 20. On the other hand, the pot valve 24 provides a high flow rate through the liquid outlet 22 at the bottom of the housing 12 when the pot valve 24 is opened. At the same time, an overflow 44 is provided which reliably prevents a flowback into the liquid inlet 20. When the filling process has finished, the tank can be closed completely, while the pressure relief valve 42 reliably prevents any damaging of the tank 40 by an overpressure.

## Claims

1. Tank filling device (10), comprising a housing (12) with a liquid inlet (20), a liquid outlet (22) at the bottom of the housing (12), an overflow (44) disposed at the housing (12) and a one-way valve for opening and closing the liquid outlet (22), wherein the one-way valve comprises a valve body and a tension element configured to bias the valve body into a closed state, **characterized in that** the one-way valve is a pot valve (24) with a valve body (26) comprising a chamber (38) open towards the liquid outlet (22) and a one-way drain valve (36) arranged at the chamber (38) with its downstream side directed towards the exterior of the chamber (38).

2. Tank filling device according to claim 1, **characterized in that** the flow rate of the drain valve (36) is smaller than the flow rate of the liquid inlet (20).

3. Tank filling device according to claim 1 or 2, **characterized in that** the valve body (26) comprises a pressure relief valve (42) arranged at the chamber (38) which is configured to open when a predetermined pressure acting from the exterior of the chamber (38) towards the inner space of the chamber (38) is exceeded.

4. Tank filling device according to one of the preceding claims, **characterized in that** the tension element is a coil spring (34).

5. Tank filling device according to one of the preceding claims, **characterized in that** the chamber (38) has a cylindrical shape.

6. Tank filling device according to one of the preceding claims, **characterized in that** the overflow (44) comprises an overflow channel (46) opening towards the interior of the housing (12).

7. Tank filling device according to claim 6, **characterized in that** the overflow channel (46) has an arcuate shape extending partially around the interior space of the housing (12).

8. Tank filling device according to claim 6 or 7, **characterized in that** the overflow (44) comprises an overflow opening (50) delimited by a lower edge disposed at a lower level than a lower edge delimiting the liquid inlet (20).

9. Tank filling device according to one of the preceding claims, **characterized in that** the liquid inlet (20) is disposed laterally at the housing (12).

10. Tank filling device according to one of the preceding claims, **characterized in that** at least a bottom wall (16) of the housing (12), a ceiling wall (14) of the housing (12), the pot valve and the drain valve form an integral unit (100), and at least an outer wall (18) of the housing forms a frame (200) surrounding a central opening (202) for removably receiving the integral unit (100).

11. Tank filling device according to claim 10, **characterized in that** the central opening (202) forms a manway opening.

12. Tank (40), comprising a top wall, a manway opening disposed in the top wall and a tank filling device (10) according to one of the preceding claims, wherein at least a part of the tank filling device (10) is removably inserted into the manway opening.

13. Tank vehicle, comprising a tank (40) according to claim 12.

## Patentansprüche

1. Tankeinfüllvorrichtung (10), umfassend ein Gehäuse (12) mit einem Flüssigkeitseinlass (20), einem Flüssigkeitsauslass (22) am Boden des Gehäuses (12), einen Überlauf (44), angeordnet am Gehäuse (12) und ein Einwegeventil zum Öffnen und Schließen des Flüssigkeitsauslasses (22), wobei das Einwegeventil einen Ventilkörper und ein Spannelement umfasst, konfiguriert um den Ventilkörper in eine geschlossene Position zu spannen, **dadurch gekennzeichnet, dass** das Einwegeventil ein Topfventil (24) ist, mit einem Ventilkörper (26), der eine in Richtung des Flüssigkeitsauslasses (22) geöffnete Kammer (38) und ein an der Kammer (38) angeordnetes Einweg-Ablassventil (36), dessen Abströmseite zur Außenseite der Kammer (38) orientiert ist, umfasst.

2. Tankeinfüllvorrichtung nach Anspruch 1, **dadurch gekennzeichnet, dass** die Durchflussrate des Ablassventils (36) kleiner ist als die Durchflussrate des Flüssigkeitseinlasses (20).

3. Tankeinfüllvorrichtung nach Anspruch 1 oder 2, **dadurch gekennzeichnet, dass** der Ventilkörper (26) ein Druckablassventil (42) umfasst, angeordnet an der Kammer (38), das konfiguriert ist sich zu öffnen, wenn ein bestimmter Druck, vom Äußeren der Kammer (38) in Richtung des Innenraums der Kammer (38) wirkend, überschritten wird.

4. Tankeinfüllvorrichtung nach einem der vorherigen Ansprüche, **dadurch gekennzeichnet, dass** das Spannelement eine Schraubenfeder (34) ist.

5. Tankeinfüllvorrichtung nach einem der vorherigen Ansprüche, **dadurch gekennzeichnet, dass** die Kammer (38) eine zylindrische Form aufweist.

6. Tankeinfüllvorrichtung nach einem der vorherigen Ansprüche, **dadurch gekennzeichnet, dass** der Überlauf (44) einen Überlaufkanal (46), geöffnet zur Innenseite des Gehäuses (12), umfasst.

7. Tankeinfüllvorrichtung nach Anspruch 6, **dadurch gekennzeichnet, dass** der Überlaufkanal (46) eine bogenförmige Form aufweist, die sich teilweise um den Innenraum des Gehäuses (12) erstreckt.

8. Tankeinfüllvorrichtung nach Anspruch 6 oder 7, **dadurch gekennzeichnet, dass** der Überlauf (44) eine Überlauföffnung (50) umfasst, begrenzt durch eine Unterkante, die auf einem tieferen Niveau als eine den Flüssigkeitseinlass (20) begrenzende Unterkante angeordnet ist.

9. Tankeinfüllvorrichtung nach einem der vorherigen Ansprüche, **dadurch gekennzeichnet, dass** der Flüssigkeitseinlass (20) seitlich am Gehäuse (12) angeordnet ist.

10. Tankeinfüllvorrichtung nach einem der vorherigen Ansprüche, **dadurch gekennzeichnet, dass** zumindest eine Bodenwand (16) des Gehäuses (12), eine Deckenwand (14) des Gehäuses (12), das Topfventil und das Ablassventil eine integrale Einheit (100) bilden und zumindest eine Außenwand (18) des Gehäuses einen Rahmen (200) ausbildet, der eine mittige Öffnung (202) zur abnehmbaren Aufnahme der integralen Einheit (100) umgibt.

11. Tankeinfüllvorrichtung nach Anspruch 10, **dadurch gekennzeichnet, dass** die mittige Öffnung (202) ein Mannloch ist.

12. Tank (40), umfassend eine obere Wand, ein Mannloch in der oberen Wand und eine Tankeinfüllvorrichtung (10) nach einem der vorherigen Ansprüche, wobei zumindest ein Teil der Tankeinfüllvorrichtung (10) herausnehmbar im Mannloch angeordnet ist.

13. Tankfahrzeug, umfassend einen Tank (40) nach Anspruch 12.

## Revendications

1. Dispositif de remplissage de réservoir (10), comprenant un boîtier (12) avec une entrée de liquide (20), une sortie de liquide (22) au fond du boîtier (12), un trop-plein (44) disposé au niveau du boîtier (12) et un clapet antiretour pour ouvrir et fermer la sortie de liquide (22), dans lequel le clapet antiretour comprend un corps de clapet et un élément de tension configuré pour solliciter le corps de clapet dans un état fermé, **caractérisé en ce que** le clapet antiretour est un clapet de pot (24) avec un corps de clapet (26) comprenant une chambre (38) ouverte vers la sortie de liquide (22) et un clapet de vidange antiretour (36) agencé au niveau de la chambre (38) avec son côté aval dirigé vers l'extérieur de la chambre (38).

2. Dispositif de remplissage de réservoir selon la revendication 1, **caractérisé en ce que** le débit du clapet de vidange (36) est plus petit que le débit de l'entrée de liquide (20).

3. Dispositif de remplissage de réservoir selon la revendication 1 ou 2, **caractérisé en ce que** le corps de clapet (26) comprend un clapet de surpression (42) agencé au niveau de la chambre (38) qui est configuré pour s'ouvrir lorsqu'une pression prédéterminée agissant depuis l'extérieur de la chambre (38) vers l'espace interne de la chambre (38) est dépassée.

4. Dispositif de remplissage de réservoir selon l'une des revendications précédentes, **caractérisé en ce que** l'élément de tension est un ressort hélicoïdal (34).

5. Dispositif de remplissage de réservoir selon l'une des revendications précédentes, **caractérisé en ce que** la chambre (38) a une forme cylindrique.

6. Dispositif de remplissage de réservoir selon l'une des revendications précédentes, **caractérisé en ce que** le trop-plein (44) comprend un canal de trop-plein (46) s'ouvrant vers l'intérieur du boîtier (12).

7. Dispositif de remplissage de réservoir selon la revendication 6, **caractérisé en ce que** le canal de trop-plein (46) a une forme arquée s'étendant partiellement autour de l'espace interne du boîtier (12).

8. Dispositif de remplissage de réservoir selon la revendication 6 ou 7, **caractérisé en ce que** le trop-plein (44) comprend une ouverture de trop-plein (50) délimitée par un bord inférieur disposé à un niveau plus bas qu'un bord inférieur délimitant l'entrée de liquide (20).

9. Dispositif de remplissage de réservoir selon l'une des revendications précédentes, **caractérisé en ce que** l'entrée de liquide (20) est disposée latéralement au niveau du boîtier (12).

10. Dispositif de remplissage de réservoir selon l'une des revendications précédentes, **caractérisé en ce qu'**au moins une paroi de fond (16) du boîtier (12), une paroi de plafond (14) du boîtier (12), le clapet de pot et le clapet de vidange forment une unité d'un seul tenant (100), et au moins une paroi externe (18) du boîtier forme un cadre (200) entourant une ouverture centrale (202) pour recevoir de façon amovible l'unité d'un seul tenant (100).

11. Dispositif de remplissage de réservoir selon la revendication 10, **caractérisé en ce que** l'ouverture centrale (202) forme une ouverture de trou d'homme.

12. Réservoir (40), comprenant une paroi de dessus, une ouverture de trou d'homme disposée dans la paroi de dessus et un dispositif de remplissage de réservoir (10) selon l'une des revendications précédentes, dans lequel au moins une partie du dispositif de remplissage de réservoir (10) est insérée de façon amovible dans l'ouverture de trou d'homme.

13. Véhicule à réservoir, comprenant un réservoir (40) selon la revendication 12.
